# EUROPÄISCHE PATENTSCHRIFT

(11) **EP 3 543 600 B1**
(45) Veröffentlichungstag und Bekanntmachung des Hinweises auf die Patenterteilung: **05.11.2025**
(21) Anmeldenummer: 19164262.8
(22) Anmeldetag: 21.03.2019
(51) Int. Cl.: F21V 8/00, G02B 19/00, G02B 27/09

(54) **MISCHSTAB ZUM MISCHEN EINES LICHTSTRAHLBÜNDELS SOWIE BELEUCHTUNGSVORRICHTUNG MIT EINEM SOLCHEN MISCHSTAB**
MIXING ROD FOR MIXING A LIGHT BEAM AND LIGHTING DEVICE WITH SUCH A MIXING ROD
TIGE DE MÉLANGE PERMETTANT DE MÉLANGER UN FAISCEAU DE RAYONS LUMINEUX AINSI QUE DISPOSITIF D'ÉCLAIRAGE DOTÉ D'UNE TELLE TIGE DE MÉLANGE

(30) Priorität: 23.03.2018 DE 102018106956
(43) Veröffentlichungstag der Anmeldung: 25.09.2019
(73) Patentinhaber: Hoffmann, Helge, 89269 Vöhringen (DE); Tobuschat, Hans Ulrich, 89134 Blaustein (DE)
(72) Erfinder: Hoffmann, Helge, 89269 Vöhringen (DE); Tobuschat, Hans Ulrich, 89134 Blaustein (DE)
(74) Vertreter: HGF

(56) Entgegenhaltungen:
- EP-A1- 3 139 084
- DE-A1- 102005 018 336
- DE-A1- 102006 004 996
- US-A- 4 656 562
- US-A1- 2003 012 533
- US-A1- 2011 199 558
- US-A1- 2012 188 786
- US-A1- 2016 290 597
- US-A1- 2017 138 546
- US-B1- 9 810 904
- GREGORY D A ET AL: "Random facet fresnel lenses and mirrors", OPTICAL ENGINEERING, SOC. OF PHOTO-OPTICAL INSTRUMENTATION ENGINEERS, BELLINGHAM, vol. 40, no. 5, 1 May 2001 (2001-05-01), pages 713 - 719, XP002392204, ISSN: 0091-3286, DOI: 10.1117/1.1355959

## Beschreibung

Die vorliegende Erfindung betrifft einen Mischstab zum Mischen eines Lichtstrahlbündels einer inhomogenen Lichtquelle sowie eine Beleuchtungsvorrichtung mit einem solchen Mischstab.

Mischstäbe zum Mischen eines Lichtstrahlbündels sind beispielsweise aus der US 2007/0024971 A1 bekannt. Mit diesen Mischstäben soll ein Lichtstrahlbündel erzeugt werden, das im Querschnitt etwa kreisförmig geformt ist und eine im Wesentlichen gleichmäßige Lichtstärkeverteilung sowie eine gleichmäßige Beleuchtungsstärkeverteilung am Lichtaustritt, d.h. eine Durchmischung des Lichtes in Richtung und Ort aufweist. Mit diesen Lichtstäben soll auch vermieden werden, wie es von anderen Lichtstäben bekannt ist, dass eine mehrfache Abbildung der Lichtquelle erzeugt wird, wodurch eine Lichtstärkeverteilung bewirkt wird, die einem Kaleidoskop ähnlich ist. Derartige kaleidoskopische Lichtstärkeverteilungen sind sehr inhomogen und sollen daher vermieden werden. Der Mischstab soll auch so ausgebildet sein, dass er bei einer kurzen Länge bereits eine gute Durchmischung bewirkt. Um diese Ziele zu erreichen, weisen diese bekannten Mischstäbe gerillte Mantelflächen auf, die eine gleichmäßige Durchmischung des Lichtstrahlbündels bewirken sollen. Die Querschnittsform dieser Mischstäbe kann kreisförmig, ellipsenförmig, oval, rechteckig oder in der Form eines Pentagons, Hexagons oder eines anderen Polygons ausgebildet sein. Der Mischstab kann zwischen einer Lichteintrittsfläche und einer Lichtaustrittsfläche konisch geformt sein. Die Lichtaustrittsfläche kann zur Ausbildung einer Linse gekrümmt ausgebildet sein.

Aus der US 2013/0294066 A1 geht ein weiterer Mischstab hervor, welcher eine Lichteintrittsfläche und eine Lichtaustrittsfläche aufweist, wobei der Lichtstab benachbart zur Lichteintrittsfläche pyramidenstumpfförmig und benachbart zur Lichtaustrittsfläche konisch mit einem kreisförmigen Querschnitt ausgebildet ist. Die Lichteintrittsfläche und/oder die Lichtaustrittsfläche können auch gekrümmt ausgebildet sein, so dass sie dem Mischstab eine Linsenfunktion verleihen.

Aus der US 2015/0003103 A1 geht ein Mischstab hervor, welcher einen polygonalen Querschnitt aufweist, wobei die Ecken abgerundet sind. Es sind unterschiedliche Querschnittsformen mit drei, vier, fünf, sechs, sieben und acht Ecken gezeigt.

In der US 2006/0146560 A1 ist eine rohrförmige Lichtführung beschrieben, dessen Innenflächen reflektierend ausgebildet sind. Durch mehrfache Reflektion an diesen Flächen wird die Lichtquelle ähnlich wie in einem Kaleidoskop mehrfach abgebildet. Vorzugsweise ist die Form der Lichtführung asymmetrisch ausgebildet.

In der FR 2,916,832 A1 ist eine Vorrichtung zur optischen Kupplung zwischen mindestens einer Lichtquelle und einer Ausgabevorrichtung offenbart. Die Kupplung ist hierbei als Lichtleiter ausgebildet, der in zwei parallelen Strängen jeweils einen Lichtstrom führt. Die Stränge sind durch einen Spalt voneinander getrennt.

In der US 2007/0,019,429 A1 ist eine Beleuchtungs- oder Anzeigevorrichtung beschrieben. Die Vorrichtung weist als optischen Eingang eine Fresnel-Linse auf. Das Ausgangssystem kann ein oder mehrere Linseneinheiten umfassen. Eine Vermischung der Lichtstrahlen wird durch die Erzeugung paralleler Lichtstrahlen im Lichtleiter verändert. Auch wenn die Linsenelemente am Ausgangssystem für eine gewisse Durchmischung sorgen, ist der Lichtleiter selbst nicht für die Durchmischung verantwortlich.

Aus der DE 10 2012 111 313 A1 geht eine Beleuchtungseinheit für ein Kraftfahrzeug hervor. Die Beleuchtungseinheit weist zumindest ein Leuchtmittel, ein Lichtleitelement, einen Lichteinkoppelbereich und einen Lichtauskoppelbereich auf. Das sichtbare Licht des Leuchtmittels ist in den Lichteinkoppelbereich einkoppelbar. Das eingekoppelte Licht wird an einem Umlenkbereich reflektiert und das reflektierte Licht wird aus dem Lichtauskoppelbereich ausgekoppelt.

In der US 2016/0,290,597 A1 ist ein Kollimations- und Homogenisierungssystem für eine LED-Leuchte offenbart. Das System umfasst eine LED-Lichtquelle, eine Lichtkollimation mit einer Empfangslinse und einer Ausgangslinse, wobei beide Linsen mit Überlaufschutzschildern ausgestattet sind. Der Kollimator weist einen quadratischen Eingangsquerschnitt und einen sechseckigen oder achteckigen Ausgangsquerschnitt auf und ist konisch ausgebildet, sodass der Eingangsquerschnitt kleiner als der Ausgangsquerschnitt ist.

In der US 2004/0,062,044 A1 ist eine Beleuchtungsvorrichtung und Bildprojektionsvorrichtung unter Verwendung der Beleuchtungsvorrichtung offenbart.

In der US 2005/0,046,807 A1 ist eine optische Vorrichtung sowie eine Beleuchtungsvorrichtung und ein Projektor offenbart. Die optische Vorrichtung umfasst ein erstes und ein zweites Lichtleitelement. Die beiden Lichtleitelemente sind getrennt ausgebildet. Der Querschnitt der Lichtleitelemente kann sich entlang der Lichtleitelemente ändern.

Aus der DE 10 2005 01 83 36 A1 geht ein Lichtleiter hervor, welcher eine unebene Lichteintrittsfläche und ebene Seitenflächen aufweist, die der Lichteintrittsfläche direkt nachgeordnet sind. Weiter wird ein optoelektronisches Bauteil mit solch einem Lichtleiter angegeben. Der Lichtleiter weist zwei Abschnitte auf, wobei der Erste aufweitend und der Zweite wenig aufweitend konfiguriert ist.

Aus der DE 10 2004 011 987 A1 geht eine optische Leitung von Licht auf eine Oberfläche hervor. Diese optische Leitung wird insbesondere bei optischen Computermäusen verwendet.

Die DE 10 2006 004 996 A1 offenbart einen Lichtmischer für LEDs. Der Lichtmischer weist zumindest zwei Eintrittsflächen für jeweils eine LED auf. Der Lichtmischer ist so geformt, dass das Licht der jeweiligen LEDs zusammengeführt, durchmischt und aus einem gemeinsamen Austrittsbereich austreten kann. In einem Ausführungsbeispiel kann die jeweilige Eintrittsfläche eine Fresnel-Linse ausbilden.

Aus der US 2011/0199558 A1 geht eine Hintergrundbeleuchtungseinheit und Flüssigkristallanzeigevorrichtung hervor. In einem Ausführungsbeispiel weist die Lichtleiterplatte an einer Ecke eine Lichtempfangsfläche auf. Diese Lichtempfangsfläche kann eine polygonale Fläche sein. Hierdurch wird das Licht aufgefächert.

Die US 2012/188786 A1 offenbart eine Ringlichtbeleuchtung, ein Strahlformer und ein Verfahren zur Beleuchtung. Die Ringlichtbeleuchtung weist ringförmig angeordnete Lichtquellen auf, wobei jede Lichtquelle einen Lichtkollektor, ein Homogenisierungselement aufweist. In einem Ausführungsbeispiel kann ein Lichtkollektor an einem Homogenisierungsstab befestigt sein. Der Homogenisierungsstab hat hier einen sechseckigen Querschnitt, und die Form des Lichtkollektors ist dem Querschnitt des Stabes angepasst.

Aus der US 4,656,562 A geht ein optischer Integrator zur Intensitätsmodifikation eines Gauß-Strahls hervor, wobei ein Stab mit facettierter Eingangsfläche offenbart ist.

Weiterhin sind Mischstäbe bekannt, welche eine raue Lichtaustrittsfläche aufweisen, so dass das Licht gestreut wird. Hierdurch soll die Durchmischung des Lichtes verbessert werden. Jedoch führen derartige raue Streuflächen zu erheblichen Lichtverlusten.

Es sind auch Beleuchtungsvorrichtungen bekannt, welche einen Mischstab aufweisen, wobei benachbart zur Lichtaustrittsfläche des Mischstabs zusätzlich eine Streuscheibe vorgesehen ist. Diese Streuscheibe weist zumindest eine raue Oberfläche auf.

Der vorliegenden Erfindung liegt die Aufgabe zugrunde, einen Mischstab zum Mischen eines Lichtstrahlbündels einer inhomogenen Lichtquelle sowie eine Beleuchtungsvorrichtung mit einem solchen Mischstab zu schaffen, wobei der Mischstab einfach und kostengünstig herstellbar ist, eine sehr gute Durchmischung des Lichtstrahlbündels in Ort und Richtung bewirkt und dennoch die Lichtverluste gering sind.

Eine weitere Aufgabe liegt darin das Lichtstrahlbündel aufzuweiten oder zu bündeln.

Eine weitere Aufgabe liegt darin den Querschnitt des Lichtstrahlbündels in eine etwa kreisförmige Kontur zu überführen.

Die Aufgaben werden durch den Gegenstand des unabhängigen Patentanspruchs gelöst.

Vorteilhafte Ausgestaltungen sind in den Unteransprüchen angegeben.

Ein erfindungsgemäßer Mischstab zum Mischen eines Lichtstrahlbündels einer inhomogenen Lichtquelle ist aus einem langgestreckten transparenten Körper mit einer Lichteintrittsfläche, einer Mantelfläche und einer Lichtaustrittsfläche ausgebildet und ist entsprechend einem der Patentansprüche ausgebildet. Die Lichtaustrittsfläche ist vorzugsweise im Wesentlichen konvex geformt und die Lichtaustrittsfläche weist mehrere Facetten auf.

Eine derart facettierte Lichtaustrittsfläche steigert die Qualität der Durchmischung des Lichtstrahlbündels erheblich. Die einzelnen Facetten können ebenflächig oder gekrümmt sein. Die Facetten bilden gemeinsam die konvex geformte Lichtaustrittsfläche. Hierdurch wird dem Mischstab eine Linsenfunktion verliehen. Diese konvex oder konkav gekrümmte Lichtaustrittsfläche hat die Wirkung, dass ein virtuelles Bild der Lichtquelle bei konvex geformter Lichtaustrittsfläche ein Stück nach hinten und bei konkaver Krümmung ein Stück nach vorne verschoben wird, wobei nach hinten die Richtung von der Mitte des Mischstabes in Richtung zur Eintrittsfläche und nach vorne in Richtung von der Mitte des Mischstabes zur Austrittsfläche bedeutet. Eine entsprechende Verschiebung des virtuellen Bildes erfolgt auch bei konkaver oder konvexer Ausbildung der Lichteintrittsfläche. Der Mischstab wirkt somit ähnlich wie eine Linse. Dies hat den Vorteil, dass der Mischstab mit einer weiteren Linse kombiniert werden kann, ohne dass die Gefahr besteht, dass die Lichtquelle durch diese Linse exakt abgebildet wird, da durch Verschieben des virtuellen Bildes der Lichtquelle sichergestellt werden kann, dass das virtuelle Bild nicht im Fokus der Linse angeordnet ist. Würde das virtuelle Bild im Fokus der Linse angeordnet sein, dann würde die Durchmischung zumindest zu einem erheblichen Teil aufgehoben werden und Vielfachbilder der Lichtquelle sowie die Strukturen der Lichtquelle in der Lichtstärkeverteilung des Lichtstrahlbündels erkennbar sein. Dies wird unten bei der Beschreibung der Beleuchtungsvorrichtung näher erläutert.

Der erfindungsgemäße Mischstab verbindet somit eine sehr gute Mischeigenschaft zum Mischen des Lichtstrahlbündels mit einer hervorragenden Effizienz und ist aufgrund der einfachen Form kostengünstig herstellbar.

Vorzugsweise sind die einzelnen Facetten glatt oder im Wesentlichen glatt. Im Wesentlichen glatt bedeutet, dass der arithmetische Mittenrauwert Ra nicht größer 1,0 µm, vorzugsweise nicht größer als 0,4 µm und insbesondere nicht größer als 0,1 µm ist.

Vorzugsweise ist die Lichtaustrittsfläche gekrümmt ausgebildet.

Vorzugsweise ist die gekrümmte Lichtaustrittsfläche oder die gekrümmte Lichteintrittsfläche konvex gekrümmt.

Vorzugsweise weist die Lichtaustrittsfläche mehrere Facetten in radialer und/oder Umfangsrichtung auf.

Der Mischstab weist zumindest im Bereich benachbart zur Lichtaustrittsfläche im Querschnitt die Form eines Polygons auf. Das Polygon weist mehr als vier Ecken, insbesondere mehr als sechs Ecken, vorzugsweise mehr als sieben oder neun oder zehn oder elf oder zwölf oder dreizehn Ecken auf, sodass die Bildebene nicht komplett abgedeckt werden kann. Ein Kreis, beziehungsweise eine Ellipse, ist jedoch kein Polygon im Sinne der vorliegenden Erfindung. Bei einer kreisförmigen oder elliptischen Querschnittsfläche ist die Mischeigenschaft im Vergleich zu einer Polygon-Querschnittsfläche schlechter.

Bei einer geraden Anzahl von Ecken können Symmetrien bestehen, die die Mischwirkung des Mischstabes 1 beeinträchtigen, daher wird grundsätzlich eine ungerade Anzahl von Ecken bevorzugt.

Der erfindungsgemäße Mischstab ist derart ausgebildet, dass er zumindest zwei Abschnitte, einen Formüberführungs- und einen Homogenisierungsabschnitt, aufweist. Der Formüberführungsabschnitt und der Homogenisierungsabschnitt sind hintereinander zwischen der Lichteintritts- und der Lichtaustrittsfläche angeordnet. Ein solcher Mischstab liefert bezüglich der Homogenisierung ein besseres Ergebnis als eine gleichmäßige Aufweitung über die gesamte Mischstablänge. Der Mischstab weist im Bereich benachbart zur Lichtaustrittsfläche im Querschnitt die Form eines Polygons auf. Das Polygon weist mehr als vier Ecken auf.

Je höher die Anzahl der Ecken ist, desto besser ist die Vermischung. Ist die Kantenlänge des Polygons sollte jedoch nicht kleiner sein als die Wellenlänge des Lichtes, da dadurch die Reflexion beeinträchtigt sein könnte.

Die Anzahl der Ecken ist vorzugsweise ungerade. Wird Licht durch den Mischstab geleitet, wird das durch eine Kante des Mischstabes im Querschnitt nahezu senkrecht zurückgeworfene Licht anschließend an zumindest zwei weiteren Kanten nochmals zurückgeworfen. Dadurch erhöht sich die Vermischung nochmals.

Ein Kreis, beziehungsweise eine Ellipse, ist jedoch kein Polygon im Sinne der vorliegenden Erfindung. Bei einer kreisförmigen oder elliptischen Querschnittsfläche ist die Mischeigenschaft im Vergleich zu einer Polygon-Querschnittsfläche schlechter.

Die Länge des Homogenisierungsabschnittes kann 40% und vorzugsweise zumindest 50 %, insbesondere zumindest 65 %, und vorzugsweise zumindest 80 % der gesamten Länge des Mischstabes betragen.

Der Homogenisierungsabschnitt weist im Wesentlichen eine konstante Querschnittsfläche und im Wesentlichen eine konstante Querschnittsform auf.

Gemäß der Erfindung ist die Form der Querschnittsfläche des Homogenisierungsabschnitts im wesentlichen konstant. Dadurch kann eine bessere Durchmischung des Lichtes erzielt werden, als bei einer diskontinuierlichen oder kontinuierlichen Veränderung der Querschnittsgröße.

Die Querschnittform des Homogenisierungsabschnitts zumindest im Bereich benachbart zur Lichtaustrittsfläche weist mehr als vier Ecken, insbesondere mehr als fünf Ecken, insbesondere mehr als sechs Ecken, vorzugsweise sieben oder neun oder zehn oder elf oder zwölf oder dreizehn Ecken auf, sodass die Bildebene nicht komplett abgedeckt werden kann. Insbesondere besitzt die Querschnittform vorzugsweise eine ungerade Anzahl von Ecken. Bei einer geraden Anzahl von Ecken können Symmetrien bestehen, die die Mischwirkung des Mischstabes 1 beeinträchtigen.

Gemäß der Erfindung weitet sich der Formüberführungsabschnitt von der Lichteintrittsfläche bis zu einer Grenzfläche mit dem Homogenisierungsabschnitt hin auf. Die Grenzfläche ist vorzugsweise parallel zur Lichteintrittsfläche. Im Bereich benachbart zur Lichteintrittsfläche ist es zweckmäßig, eine an die Lichtquelle angepasste Querschnittsform vorzusehen, wie zum Beispiel eine quadratische, rechteckige oder kreisförmige Querschnittsform. Dadurch wird das Etendue zumindest annäherungsweise erhalten, wodurch eine bestmögliche Kollimierung des aus dem Mischstab austretenden Lichtbündels erfolgt. An der Grenzfläche zwischen den beiden Abschnitten ist es zweckmäßig, dass die Form und Größe des Querschnittes der beiden Abschnitte gleich ist, wodurch der Übergang stetig ist und die beiden Abschnitte zueinander bündig sind. Da sich die Form des Querschnittes bei der Lichteintrittsfläche und die Form des Querschnittes bei der Grenzfläche unterscheiden, ist es zweckdienlich, wenn sich die Form des Querschnittes des Formüberführungsabschnittes dementsprechend allmählich ändert, zum Beispiel von einem Viereck zu einem Elfeck. Ein Elfeck erzeugt eine bessere Farbdurchmischung als ein Viereck. Ein Viereck deckt aber unter Umständen die Form der Lichtquelle ab.

Besitzt der Querschnitt des Lichtstabes eine polygonale Form, dann können die Ecken scharfkantig oder abgerundet ausgebildet sein.

Die Mantelfläche des Mischstabes ist vorzugsweise aus glatten Segmenten ausgebildet, wodurch die Lichtverluste gering gehalten werden.

Die Segmente der Mantelflächen können ebenflächig oder leicht gekrümmt sein.

Die Länge des Mischstabes beträgt vorzugsweise zumindest 1 cm, insbesondere zumindest 4 cm, bzw. zumindest 8 cm.

Das Verhältnis der Länge zum Durchmesser an der Lichteintrittsfläche beträgt zumindest 3:1, insbesondere zumindest 10:1, und vorzugsweise zumindest 15:1. Ist die Lichteintrittsfläche in der Form eines Polygons ausgebildet, dann ist der Durchmesser der Lichteintrittsfläche die größte mögliche Streckenlänge innerhalb des entsprechenden Polygons. Beim Quadrat ist es die Diagonale.

Eine Querschnittsfläche des Mischstabes steht grundsätzlich senkrecht zur optischen Achse des Mischstabes. Für die Querschnittsfläche gilt das gleiche wie für die Eintrittsfläche, dass deren Durchmesser die größte mögliche Streckenlänge innerhalb des entsprechenden Polygons ist. Beim Quadrat ist es die Diagonale.

Eine Aufweitung im Sinne der vorliegenden Erfindung ist die Vergrößerung dieses Durchmessers und eine Verjüngung die Verkleinerung dieses Durchmessers. So kann zum Beispiel bei einer Überführung eines Vierecks zu einem Elfeck in einem Formüberführungsabschnitt sich die Querschnittfläche vergrößern, deren Durchmesser jedoch erhalten bleiben.

Es hat sich gezeigt, dass je länger der Homogenisierungsabschnitt ist, desto besser ist die Homogenisierung des Lichtes. Deshalb sollte der Formüberführungsabschnitt möglichst kurz und die Aufweitung des Formüberführungsabschnitts möglichst schnell erfolgen.

Andererseits sollte die Aufweitung des Formüberführungsabschnittes auch nicht zu schnell erfolgen, denn dann kann der durch eine Aufweitung erzielte Effekt der Bündelung des Lichtes beeinträchtigt werden, da ein Teil des Lichtes das unter größeren Eintrittswinkeln an der Lichteintrittsfläche eintritt nicht an der Begrenzungsfläche des Formüberführungsabschnittes reflektiert wird und somit an der Austrittfläche des Mischstabes auch unter entsprechend großem Winkel austritt. Dies hat zur Folge, dass dieses Licht nicht in den gewünschten Zielbereich gelangt.

Die Länge des Formüberführungsabschnitts kann maximal 30 %, beziehungsweise maximal 25 % und vorzugsweise maximal 20 %, insbesondere maximal 15 %, und vorzugsweise maximal 10 % der gesamten Länge des Mischstabes betragen.

Der Formüberführungsabschnitt weist vorzugsweise eine Länge auf, die zumindest dem 0,8-fachen des Durchmessers der Eintrittsfläche bzw. zumindest dem 1,2-fachen bzw. zumindest dem 1,5-fachen bzw. zumindest dem 2-fachen bzw. zumindest dem 2,5-fachen des Durchmessers der Eintrittsfläche entspricht. Ist die Lichteintrittsfläche in der Form eines Polygons ausgebildet, dann ist der Durchmesser der Lichteintrittsfläche wieder die größte mögliche Streckenlänge innerhalb des entsprechenden Polygons.

Statt einer festen Trennung zwischen den beiden Abschnitten, kann gemäß einem nicht beanspruchten Beispiel die Aufweitung allmählich über die gesamte Länge des Mischstabes erfolgen. Gemäß einem Vergleichsbeispiel kann die Aufweitung sich von der Eintrittsfläche zur Austrittsfläche etwa exponentiell abschwächen. Eventuelle ungewünschte Effekte durch die Übergangsregion können sich so vermeiden lassen. Der Formüberführungsabschnitt stellt den Bereich dar, in dem die Form der Eintrittsfläche auf die Querschnittsform des Homogenisierungsabschnitts überführt wird. Es kann auch ein Bereich zwischen den beiden Abschnitten vorgesehen sein, in dem sich z.B. der Mischstab nicht aufweitet aber der Übergang zwischen den unterschiedlichen Querschnittsformen noch nicht abgeschlossen ist. Ein solcher Abschnitt wird als Übergangsabschnitt bezeichnet.

Der Mischstab ist vorzugsweise aus einem transparenten Kunststoff ausgebildet. Grundsätzlich kann er auch aus Glas ausgebildet sein. Das bevorzugte Material ist jedoch ein Kunststoff auf Silikonbasis oder PMMA, beziehungsweise PMMI. Dieses Material ist einfach verarbeitbar, besitzt eine hohe Transparenz, wodurch die Lichtverluste gering gehalten werden und ist langzeitstabil und UV-stabil. Kunststoff auf Silikonbasis und PMMI sind auch temperaturunempfindlich.

Nach einem weiteren Aspekt der vorliegenden Erfindung ist eine Beleuchtungsvorrichtung vorgesehen, welche eine Lichtquelle, einen Mischstab und eine Linse aufweist. Der Mischstab entspricht einem der oben erläuterten Mischstäbe und ist mit seiner Lichteintrittsfläche in Richtung zur Lichtquelle weisend angeordnet.

Die Linse ist vorzugsweise entlang einer optischen Achse des korrespondierenden Mischstabes verschieblich und benachbart zur Lichtaustrittsfläche angeordnet.

Auch die Linse ist vorzugsweise aus einem transparenten Kunststoff, insbesondere Silikon, ausgebildet.

Silikon besitzt neben dem Vorteil der Temperaturunempfindlichkeit auch den Vorteil dass die Linse einfach und kostengünstig zu fertigen ist. Im Gegensatz dazu wird für gewöhnlichen Kunststoff eine relativ große Anspritzfläche benötigt, die unter Umständen in die optischen Flächen hineinragen kann. Des Weiteren muss bei dicken Linsen aus gewöhnlichem Kunststoff entsprechend nachgedrückt werden, was die Zykluszeit verlängert und damit die Kosten erhöht.

Durch Verschieben der Linse kann der Strahlkegel, mit welchem das von der Beleuchtungsvorrichtung austretende Lichtstrahlbündel abgeleitet wird, unterschiedlich eingestellt werden. Durch eine konvexe oder konkave Form der Lichtaustrittsfläche des Mischstabs erzeugt dieser bei entsprechender Wahl der Krümmung ein virtuelles Bild der Lichtquelle, das sich nicht in der Nähe oder innerhalb des Fokusbereichs der Linse befindet, was bei einem Mischstab mit planer Austrittsfläche der Fall sein könnte. Ein virtuelles Bild der Lichtquelle, welches sich in der Nähe oder innerhalb des Fokusbereichs der Linse befindet, sollte möglichst vermieden werden, da hierdurch die Mischung des Lichtstrahlbündels durch den Mischstab zumindest zu einem Teil wieder aufgehoben wird. Vorzugsweise beträgt der Abstand zwischen dem Fokus der Linse und des durch den Mischstab erzeugten virtuellen Bildes zumindest 1 mm, vorzugsweise zumindest 1 cm und insbesondere zumindest 5cm. Die Begrenzung des Verschiebebereiches ist derart ausgebildet, dass ein Abstand zwischen dem Fokus der Linse und des durch den Mischstab erzeugten virtuellen Bildes bestehen bleibt.

Vorzugsweise ist bzw. sind entlang der optischen Achse im Bereich zwischen der Lichtquelle und der Linse außer dem Mischstab kein weiteres optisches Element, insbesondere keine weiteren optischen Elemente zur Durchmischung, angeordnet. Durch die Ausgestaltung des Mischstabes sind auch keine weiteren optischen Elemente, wie zum Beispiel Streuscheiben, notwendig, um eine ausreichende Durchmischung des Lichtstrahlbündels zu erhalten.

Die Lichtquelle weist vorzugsweise mehrere Leuchtdioden bzw. eine Leuchtdiode mit mehreren Leuchtflächen auf. Die Beleuchtungsvorrichtung macht jedoch auch Sinn für andere inhomogene Lichtquellen, gekennzeichnet durch eine inhomogene spezifische Lichtausstrahlung und/oder eine inhomogene Farbverteilung und/oder eine inhomogene Richtungsverteilung.

Die Beleuchtungsvorrichtung kann mehrere Mischstäbe aufweisen, welchen jeweils zumindest eine Lichtquelle zugeordnet ist. Jedem Mischstab kann eine separate Linse zugeordnet sein. Die Linsen werden gemeinsam oder gruppenweise entlang der optischen Achse der einzelnen Mischstäbe verfahren. Es kann jedoch auch eine gemeinsame Linse vorgesehen sein, welche die Lichtaustrittsflächen aller Mischstäbe abdeckt

Des Weiteren kann die Beleuchtungsvorrichtung benachbart zur Lichtaustrittsfläche der Linse eine Streuscheibe aufweisen, welche vorzugsweise holographische, Mikro- und/oder Nanostrukturen aufweist. Dadurch werden sowohl weichere Helligkeitsverläufe (sogenanntes "Absoften") in den Randbereichen des Lichtstrahlbündels ermöglicht als auch eine Glättung der Außenkontur des Lichtstrahlbündels bei Beleuchtungsvorrichtungen, welche mehr als einen Mischstab aufweisen. Durch diese Positionierung der Streuscheibe treten keine signifikanten Lichtverluste auf.

Die Erfindung wird beispielhaft näher anhand der Zeichnungen erläutert. Die Zeichnungen zeigen schematisch in:
- Figur 1: ein Vergleichsbeispiel eines Mischstabs in perspektivischer Ansicht, und
- Figur 2: ein Vergleichsbeispiel einer Beleuchtungsvorrichtung in einer Seitenansicht.
- Figur 3: einen Mischstab in perspektivischer Ansicht,
- Figur 4: einen Mischstab in einer anderen perspektivischer Ansicht,
- Figur 5: einen Mischstab und eine Linse in einer Seitenansicht , und
- Figur 6: einen Mischstab und eine Linse in perspektivischer Ansicht.

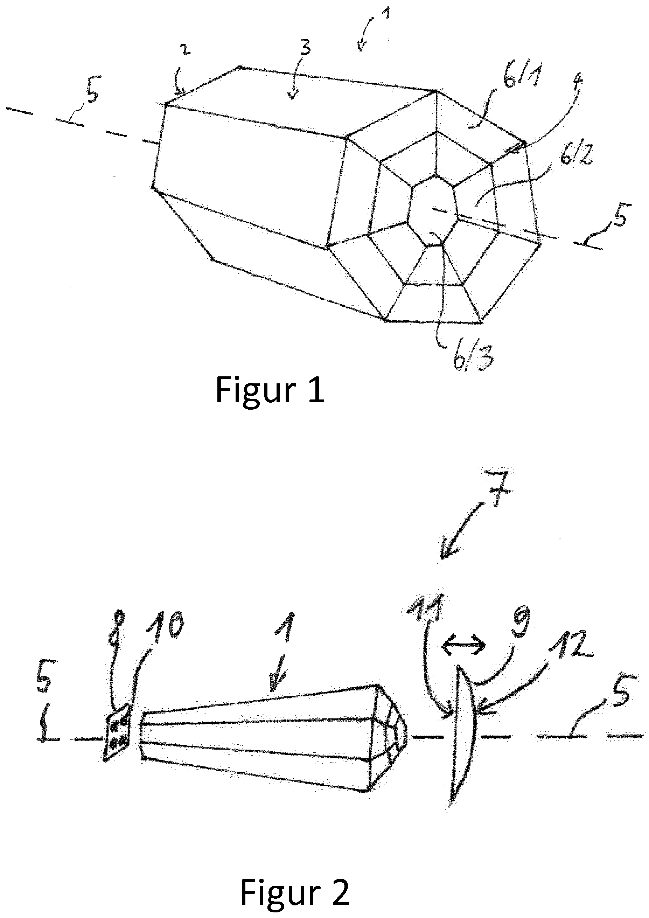

Ein Vergleichsbeispiel eines Mischstabs 1 ist ein langgestreckter, monolithischer Körper aus einem transparenten Material (Fig. 1). Der Mischstab 1 weist eine Lichteintrittsfläche 2, eine Mantelfläche 3 und eine Lichtaustrittsfläche 4 auf.

Eine optische Achse 5 erstreckt sich durch den Mittelpunkt der Lichteintrittsfläche 2 und den Mittelpunkt der Lichtaustrittsfläche 4.

Im vorliegenden ersten Vergleichsbeispiel (Fig. 1,2) ist die Lichteintrittsfläche 2 ebenflächig und steht senkrecht zur optischen Achse 5.

Die Lichtaustrittsfläche 4 ist im Wesentlichen konvex gekrümmt und aus mehreren glatten Facetten 6 zusammengesetzt. Im vorliegenden Vergleichsbeispiel ist die Lichtaustrittsfläche 4 aus zwei ringförmig angeordneten Sätzen von jeweils sieben Facetten 6/1 bzw. 6/2 und einer zentralen Facette 6/3 ausgebildet. Die ringförmig angeordneten Facetten 6/1 und 6/2 sind jeweils ebenflächige Facetten, wobei die zentrale Facette 6/3 eine leichte konvexe Wölbung aufweist.

Der Mischstab 1 besitzt einen polygonalen Querschnitt, wobei der Querschnitt im vorliegenden Vergleichsbeispiel ein Siebeneck (Heptagon) ist. Dementsprechend ist die Mantelfläche 3 aus sieben ebenflächigen Segmenten ausgebildet.

Der Mischstab 1 kann jedoch auch mit einer anderen Querschnittsform ausgebildet sein. Bevorzugt sind Polygone mit mehr als vier, insbesondere mehr als sechs Ecken, sie weisen vorzugsweise sieben oder neun oder zehn oder elf oder zwölf oder dreizehn Ecken auf. Insbesondere besitzt das Polygon vorzugsweise eine ungerade Anzahl von Ecken.

Die Polygone sind vorzugsweise regelmäßige Polygone.

Im vorliegenden Vergleichsbeispiel ist die Lichteintrittsfläche 2 ebenflächig ausgebildet. Im Rahmen der Erfindung kann es zweckmäßig sein, dass auch die Lichteintrittsfläche 2 konkav oder konvex gewölbt ist.

Die Querschnittsfläche ist an der Lichteintrittsfläche 2 kleiner als an der Lichtaustrittsfläche 4, so dass sich der Mischstab von der Lichteintrittsfläche 2 zur Lichtaustrittsfläche 4 konisch aufweitet.

Eine Beleuchtungsvorrichtung 7 mit einem Mischstab 1, wie er zuvor beschrieben wurde, weist zusätzlich noch eine Lichtquelle 8 und eine Linse 9 auf (Fig. 2). Die Lichtquelle 8 ist ein Leuchtdiodenarray mit mehreren Leuchtdioden 10. Das Leuchtdiodenarray 8 ist senkrecht zur optischen Achse 5 des Mischstabes 1 und mit den Leuchtdioden 10 in Richtung zur Lichteintrittsfläche 2 weisend angeordnet. Hierdurch tritt das von den Leuchtdioden 10 abgestrahlte Licht an der Lichteintrittsfläche 2 in den Mischstab 1 ein. Der Abstand zwischen dem Leuchtdiodenarray 8 und der Lichteintrittsfläche 2 ist möglichst klein, um möglichst die gesamte Lichtmenge mit dem Mischstab 1 zu erfassen. In Figur 2 ist zur einfacheren zeichnerischen Darstellung der Abstand zwischen dem Leuchtdiodenarray 8 und der Lichteintrittsfläche 2 größer als in der Realität dargestellt.

Die Linse 9 ist benachbart zur Lichtaustrittsfläche 4 des Mischstabes 1 angeordnet. Die Linse 9 ist konzentrisch zur optischen Achse 5 des Mischstabes angeordnet und ist entlang der optischen Achse 5 beweglich. Hierzu sind geeignete Führungselemente vorgesehen, welche dem Fachmann bekannt sind und zur einfacheren zeichnerischen Darstellung in Figur 2 weggelassen sind. Die Linse 9 weist in diesem Vergleichsbeispiel eine konvex gekrümmte zum Mischstab 1 zeigende Oberfläche 11 und eine konvex gewölbte, vom Mischstab 1 wegweisende Oberfläche 12 auf. Im Rahmen der Erfindung kann es zweckmäßig sein, dass die zum Mischstab 1 zeigende Oberfläche 11 ebenflächig, konkav oder andersartig gekrümmt ist. Durch Verschieben der Linse entlang der optischen Achse 5 kann die Aufweitung des von der Beleuchtungsvorrichtung 7 abgegebenen Lichtstrahlkegels verändert werden.

Die Linse 9 ist vorzugsweise auch aus einem Kunststoffmaterial, insbesondere einem Kunststoffmaterial auf Silikonbasis ausgebildet. Die Linse 9 kann sehr nahe an die Lichtaustrittsfläche 4 bewegt werden. Je näher sich die Linse 9 an der Lichtaustrittsfläche 4 befindet, desto stärker wird die Aufweitung des Kegels des Lichtstrahlbündels durch Bewegen der Linse verändert. Daher ist es zweckmäßig, dass sich keine weiteren optischen Elemente im Bereich zwischen der Lichtaustrittsfläche 4 und der Linse 9 befinden, so dass die Linse 9 bis zur Lichtaustrittsfläche 4 bewegt werden kann. Ein möglichst großer einstellbarer Winkelbereich ist sehr von Vorteil.

Die Lichtaustrittsfläche 4 besitzt eine Doppelfunktion, indem sie einerseits durch die Wölbung eine Linsenfunktion des Mischstabes 1 bewirkt und andererseits durch das Vorsehen der mehreren Facetten 6 die Durchmischung des Lichtstrahlbündels fördert.

Der Mischstab 1 weist vorzugsweise zumindest vier Facetten, insbesondere zumindest zehn Facetten und besonders bevorzugt zumindest fünfzehn Facetten auf. Die Anzahl der Facetten am Austritt sollte jedoch nicht größer als 200 und insbesondere nicht größer als 150, beziehungsweise nicht größer als 100 sein. Die maximale Anzahl der Facetten kann durch das Herstellungsverfahren begrenzt sein. Beim Spritzgießen sind kleine Facetten nicht darstellbar und ergeben eine mehr oder weniger gleichmäßig gekrümmte Oberfläche, wodurch die durchmischende Wirkung der Facettierung reduziert wird.

Weiterhin wird durch die polygonale Form des Querschnittes des Mischstabes 1 mit insbesondere einer ungeraden Anzahl von Ecken des Mischstabes 1 die Durchmischung des Lichtstrahlbündels verstärkt.

Da sowohl die Mantelfläche 3 aus glatten Segmenten als auch die Lichtaustrittsfläche 4 aus glatten Facetten 6 zusammengesetzt sind, sind die Lichtverluste am Mischstab 1 sehr gering.

Somit wird eine Beleuchtungsvorrichtung geschaffen, bei welcher auf einfache Art und Weise Licht einer inhomogenen Lichtquelle sehr gut gemischt wird, die Lichtverluste gering sind und die Aufweitung des Lichtstrahlbündels über einen großen Bereich durch Verschieben der Linse 9 einstellbar ist.

Die Beleuchtungsvorrichtung kann auch mehrere Mischstäbe aufweisen, wobei jedem Mischstab zumindest eine Lichtquelle zugeordnet ist. Die einzelnen Mischstäbe sind vorzugsweise zueinander parallel angeordnet. Die einzelnen Mischstäbe sind vorzugsweise identisch ausgebildet. Jedem Mischstab kann eine separate Linse zugeordnet sein. Die Linsen werden gemeinsam oder gruppenweise entlang der optischen Achse der einzelnen Mischstäbe verfahren. Es kann jedoch auch eine gemeinsame Linse vorgesehen sein, welche die Lichtaustrittsflächen aller Mischstäbe abdeckt.

Im Nachfolgenden wird ein Ausführungsbeispiel erläutert. Gleiche Bauteile sind mit gleichen Bezugszeichen versehen. Sofern nachfolgend nichts anderes ausgeführt ist, gelten die entsprechenden Beschreibungen und Erläuterungen des Vergleichsbeispiels auch für das Ausführungsbeispiel.

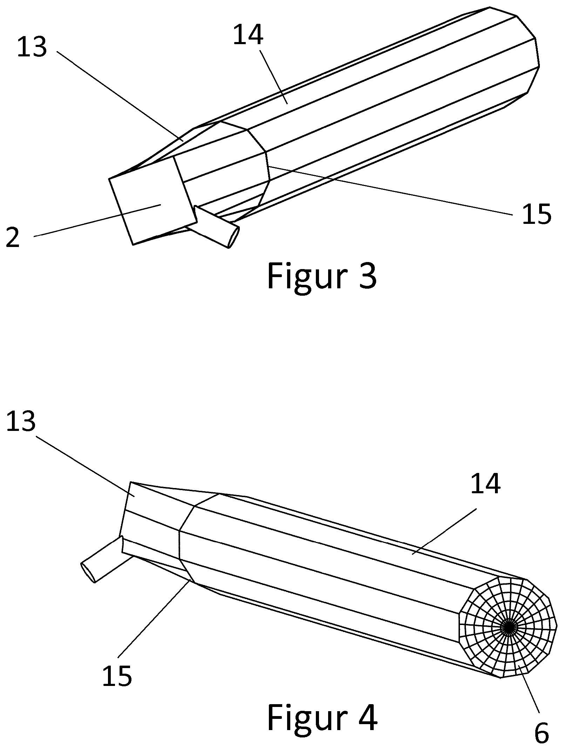

Ein Mischstab 1 ist ein langgestreckter, monolithischer Körper aus einem transparenten Material (Fig. 3 und 4). Der Mischstab 1 weist eine Lichteintrittsfläche 2, eine Mantelfläche 3 und eine Lichtaustrittsfläche 4 auf.

Eine optische Achse 5 erstreckt sich durch den Mittelpunkt der Lichteintrittsfläche 2 und den Mittelpunkt der Lichtaustrittsfläche 4.

Die Lichtaustrittsfläche 4 ist im Wesentlichen konvex gekrümmt und aus mehreren glatten Facetten 6 zusammengesetzt. Im vorliegenden Ausführungsbeispiel ist die Lichtaustrittsfläche 4 aus sechs ringförmig angeordneten Sätzen von jeweils 24 Facetten 6 ausgebildet. Die ringförmig angeordneten Facetten 6 sind jeweils ebenflächige Facetten.

Im vorliegenden Ausführungsbeispiel ist der Mischstab 1, ähnlich wie bei einem Obelisken, in zwei Abschnitte, in einen Formüberführungsabschnitt 13 und in einen Homogenisierungsabschnitt 14, unterteilt. Der Übergang zwischen den beiden Abschnitten ist durch eine Grenzfläche 15 gegeben.

Der Formüberführungsabschnitt 13 und der Homogenisierungsabschnitt 14 sind entlang der optischen Achse hintereinander angeordnet. Der Formüberführungsabschnitt 13 fängt mit der Lichteintrittsfläche 2 an und endet an der Grenzfläche 15, wobei die Grenzfläche 15 senkrecht zur optischen Achse 5 ausgebildet ist.

Gemäß einem Vergleichsbeispiel weist der Formüberführungsabschnitt 13 von der Lichteintrittsfläche 2 in Richtung der Lichtaustrittsfläche 4 im Wesentlichen einen konstanten Durchmesser auf. Hierbei ändert sich die Form der Querschnittsfläche.

Der Formüberführungsabschnitt 13 ist von der Lichteintrittsfläche 2 zur Grenzfläche 15 des Homogenisierungsabschnittes 14 mit zunehmendem Durchmesser der Querschnittsfläche ausgebildet. Im vorliegenden Ausführungsbeispiel entspricht die Lichteintrittsfläche 2 einem ebenflächigen Quadrat und steht senkrecht zur optischen Achse 5. Am Ende des Formüberführungsabschnittes 13 an der Grenzfläche 15 entspricht der Querschnitt des Formüberführungsabschnittes 13 einem Elfeck. Der Formüberführungsabschnitt 13 kann jedoch sowohl bei der Lichteintrittsfläche 2 als auch bei der Grenzfläche 15 auch mit einer anderen Querschnittsform ausgebildet sein.

Die Mantelfläche 3 des Formüberführungsabschnittes 13 ist aus elf ebenflächigen Segmenten ausgebildet und führt dabei den Querschnitt von einem Viereck in ein Elfeck über.

Der Homogenisierungsabschnitt 14 ist nach dem Formüberführungsabschnitt 13 angeordnet, beginnt mit der Grenzfläche 15 und endet mit der Lichtaustrittsfläche 4. Der Homogenisierungsabschnitt 14 nimmt in diesem Ausführungsbeispiel dabei etwa 80 % der gesamten Länge zwischen der Lichteintrittsfläche 2 und der Lichtaustrittsfläche 4 des Mischstabes 1 ein. Über der gesamten Länge des Homogenisierungsabschnittes 14, von der Grenzfläche 15 bis hin zur Lichtaustrittsfläche 4, ist dessen Querschnittsfläche konstant.

Die Form des Querschnittes des Homogenisierungsabschnittes 14 ist über seinen gesamten Längenbereich konstant und entspricht der Form, welche der Formüberführungsabschnitt 13 an der Grenzfläche 15 bildet.

Im vorliegenden Ausführungsbeispiel ist die Mantelfläche 3 des Homogenisierungsabschnittes 14 aus elf ebenflächigen Segmenten ausgebildet.

Vorzugsweise weist die Größe des Querschnittes des Homogenisierungsabschnittes 14 eine Fläche von zumindest 5 mm², vorzugsweise zumindest 10 mm² und insbesondere zumindest 20 mm² auf.

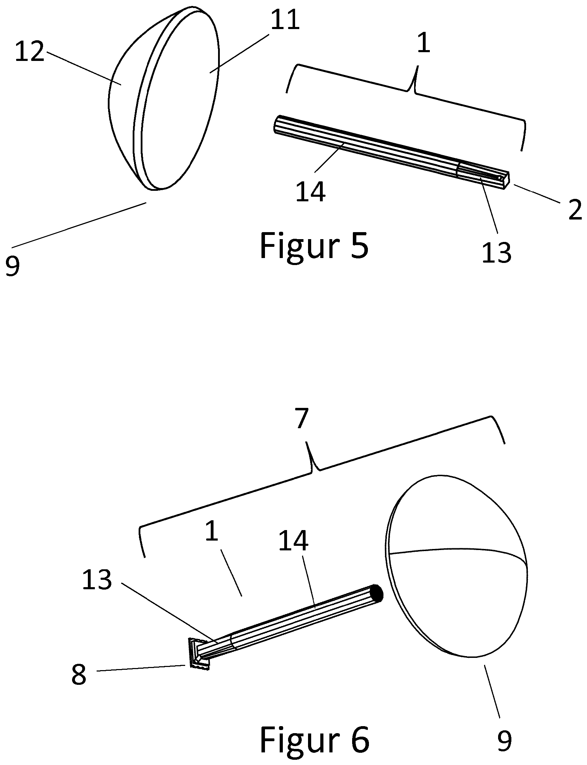

Wie im vorangegangenen Vergleichsbeispiel kann der Mischstab Teil einer Beleuchtungsvorrichtung 7 sein. Zusätzlich zum Mischstab 1, weist sie noch eine Lichtquelle 8 und eine Linse 9 auf (Fig. 5 und 6). Lichtquelle 8 und Linse 9 sind wie im vorangegangenen Vergleichsbeispiel ausgebildet.

Eine weitere Möglichkeit der Erfindung besteht darin, dass benachbart zur Lichtaustrittsfläche der Linse eine Streuscheibe angeordnet ist. Diese weist insbesondere holographische, Mikro- und/oder Nanostrukturen auf. Mikrostrukturen können zum Beispiel in Quarzglas eingelassene Luftbläschen sein.

Der Mischstab kann zwischen dem Homogenisierungsabschnitt und der Austrittsfläche einen sich in Richtung zur Austrittsfläche aufweitenden Abschnitt aufweisen. Mit einem solchen Aufweitungsabschnitt kann eine zusätzliche Bündelung des Lichtstrahlbündels erfolgen Von dem oben erläuterten Ausführungsbeispiel mit einer quadratischen Lichteintrittsfläche 2 und einer elfeckigen Lichtaustrittsfläche 4 wurden unterschiedliche Prototypen mit unterschiedlich langem Formüberführungsabschnitt 13 hergestellt. Der Durchmesser der Querschnittsfläche des Homogenisierungsabschnitts 14 beträgt etwa 3,5 mm. Die Länge des Homogenisierungsabschnitts 14 beträgt 40 mm. Die Länge und Breite der quadratischen Lichteintrittsfläche 4 beträgt jeweils 2,4 mm. Die unterschiedlichen Prototypen wiesen Formüberführungsabschnitte mit unterschiedlichen Längen von 2 mm, 3 mm, 5 mm und 10 mm auf. Der Mischstab mit einem Formüberführungsabschnitt 13 von 10 mm Länge ergibt ein Lichtstrahlbündel mit hoher Leuchtdichte und guter Homogenisierung. Bei einer Länge des Formüberführungsabschnittes von 5 mm ist die Leuchtdichte gut, bei einer Länge von 3 mm in Ordnung und bei einer Länge von 2 mm schlecht.

Die Länge des Homogenisierungsabschnittes ist an sich frei wählbar. Je länger der Homogenisierungsabschnitt ist, desto besser ist die Homogenisierung.

### Bezugszeichenliste

- 1: Mischstab
- 2: Lichteintrittsfläche des Mischstabs
- 3: Mantelfläche des Mischstabs
- 4: Lichtaustrittsfläche des Mischstabs
- 5: optische Achse
- 6: Facette
- 7: Beleuchtungsvorrichtung
- 8: Lichtquelle
- 9: Linse
- 10: Leuchtdiode
- 11: Lichteintrittsfläche der Linse
- 12: Lichtaustrittsfläche der Linse
- 13: Formüberführungsabschnitt
- 14: Homogenisierungsabschnitt
- 15: Grenzfläche

## Patentansprüche

1. Mischstab zum Mischen eines Lichtstrahlbündels einer inhomogenen Lichtquelle (8), wobei der Mischstab (1) aus einem langgestreckten transparenten Körper mit einer Lichteintrittsfläche (2), einer Mantelfläche (3) und einer Lichtaustrittsfläche (4) ausgebildet ist, wobei
die Lichtaustrittsfläche (4) und/oder die Lichteintrittsfläche (2) konvex oder konkav gekrümmt geformt ist/sind, und
die gekrümmte Lichtaustrittsfläche (4) und/oder gekrümmte Lichteintrittsfläche (2) mehrere Facetten (6) aufweist,
und wobei der Mischstab (1) in Längsrichtung einen Formüberführungsabschnitt (13) aufweist, welcher die Form der Querschnittsfläche des Mischstabs (1) von der Lichteintrittsfläche (2) zur Grenzfläche (15) eines Homogenisierungsabschnittes (14) in eine andere Form überführt, und der Mischstab (1) den Homogenisierungsabschnitt (14) umfasst, welcher in Richtung von der Lichteintrittsfläche (2) zur Lichtaustrittsfläche (4) im Wesentlichen eine konstante Querschnittsfläche und im Wesentlichen eine konstante Querschnittsform aufweist, wobei der Mischstab (1) zumindest im Bereich benachbart zur Lichtaustrittsfläche (4) im Querschnitt die Form eines Polygons mit mehr als vier Ecken aufweist, der Formüberführungsabschnitt (13) von der Lichteintrittsfläche (2) zur Grenzfläche (15) des Homogenisierungsabschnittes (14) mit zunehmendem Durchmesser der Querschnittsfläche ausgebildet ist und die Länge des Homogenisierungsabschnittes (14) zumindest 30 % der gesamten Länge des Mischstabes (1) beträgt.

2. Mischstab nach Anspruch 1,
**dadurch gekennzeichnet,**
**dass** die Facetten glatt oder im Wesentlichen glatt sind.

3. Mischstab nach einem der Ansprüche 1 oder 2,
**dadurch gekennzeichnet,**
**dass** die Lichtaustrittsfläche (4) mehrere Facetten (6) in radialer und/oder Umfangsrichtung aufweist.

4. Mischstab nach einem der Ansprüche 1 bis 3,
**dadurch gekennzeichnet,**
**dass** der Formüberführungsabschnitt (13) und der Homogenisierungsabschnitt (14) an einer gemeinsamen Grenzfläche (15) bündig ausgebildet sind.

5. Mischstab nach einem der Ansprüche 1 bis 4,
**dadurch gekennzeichnet,**
**dass** die Querschnittsform des Formüberführungsabschnittes (13) von der Lichteintrittsfläche (2) in Richtung der Lichtaustrittsfläche (4) sich von einem Polygon, insbesondere von einem Quadrat, zu einem anderen Polygon verformt, und/oder,
**dass** das Polygon mehr als 5 Ecken aufweist.

6. Mischstab nach einem der Ansprüche 1 bis 5,
**dadurch gekennzeichnet,**
**dass** die Mantelfläche (3) aus glatten Segmenten ausgebildet ist, und/oder,
**dass** die Länge des Mischstabes (1) zumindest 1 cm beträgt, und/oder,
**dass** das Verhältnis der Länge zum Durchmesser an der Lichteintrittsfläche (4) zumindest 3:1 beträgt.

7. Mischstab nach einem der Ansprüche 1 bis 6,
**dadurch gekennzeichnet,**
**dass** der Mischstab (1) aus einem Kunststoff auf Silikonbasis oder PMMI oder PMMA ausgebildet ist.

8. Mischstab nach einem der Ansprüche 1 bis 7,
**dadurch gekennzeichnet,**
**dass** die Querschnittsform des Homogenisierungsabschnitts (14) eine ungerade Anzahl von Ecken aufweist.

9. Beleuchtungsvorrichtung umfassend
- eine Lichtquelle (8),
- einen Mischstab (1) nach einem der Ansprüche 1 bis 8, wobei der Mischstab (1) mit seiner Lichteintrittsfläche (2) in Richtung zur Lichtquelle (8) weisend angeordnet ist, und
- eine Linse (9), welche benachbart zur Lichtaustrittsfläche (4) angeordnet ist.

10. Beleuchtungsvorrichtung nach Anspruch 9,
**dadurch gekennzeichnet,**
**dass** der Querschnitt der Lichteintrittsfläche (2) des Mischstabes (1) in der Form ein Polygon ist,
welche der Grundform der Lichtquelle (8) entspricht,
und in der Größe derart ausgebildet ist, dass er die Lichtquelle (8) umfasst,
wobei der Durchmesser der Querschnittsfläche höchstens 50 % größer ist als die Grundfläche der Lichtquelle (8).

11. Beleuchtungsvorrichtung nach Anspruch 9 oder 10,
**dadurch gekennzeichnet,**
**dass** die Linse (9) in Richtung einer optischen Achse (5) des korrespondierenden Mischstabes (1) verschiebbar ausgebildet ist, und/oder,
**dass** die Linse (9) derart eine Brennweite aufweist,
so dass der Abstand zwischen dem Fokus der Linse (9) und des durch den Mischstab (1) erzeugten virtuellen Bildes zumindest 1 mm beträgt, und/oder,
**dass** die Linse (9) asphärisch ausgebildet ist.

12. Beleuchtungsvorrichtung nach einem der Ansprüche 9 bis 11,
**dadurch gekennzeichnet,**
**dass** entlang der optischen Achse (5) im Bereich zwischen der Lichtquelle (8) und der beweglichen Linse (9) außer dem Mischstab (1) keine weiteren optischen Elemente zur Durchmischung angeordnet sind.

13. Beleuchtungsvorrichtung nach einem der Ansprüche 9 bis 12,
**dadurch gekennzeichnet,**
**dass** die Lichtquelle (8) mehrere Leuchtdioden (10) oder eine Leuchtdiode (10) mit mehreren strahlenden Flächen umfasst, und/oder,
**dass** die Beleuchtungsvorrichtung (7) mehrere Mischstäbe (1) aufweist, und/oder,
**dass** die Beleuchtungsvorrichtung (7) mehrere Linsen (9) aufweist, und/oder,
**dass** benachbart zur Lichtaustrittsfläche der Linse eine Streuscheibe angeordnet ist,
wobei diese Streuscheibe holographische, Mikro- und/oder Nanostrukturen aufweist.

## Claims

1. A mixing rod for mixing a beam of light rays from a non-homogeneous light source (8),
wherein
the mixing rod (1) is formed from an elongated transparent body comprising a light entry surface (2), a lateral surface (3), and a light exit surface (4), the light exit surface (4) and/or the light entry surface (2) being shaped so as to be convexly or concavely curved, and
the curved light exit surface (4) and/or the curved light entry surface (2) comprising a plurality of facets (6),
and wherein
the mixing rod (1) comprises a shape transition portion (13) in the longitudinal direction, which changes the shape of the cross-sectional area of the mixing rod (1) from the light entry surface (2) toward a boundary surface (15) of a homogenization portion (14) into another shape, and the mixing rod (1) comprises the homogenization portion (14), which comprises in the direction from the light entry surface (2) to the light exit surface (4) a substantially constant cross-sectional area and a substantially constant cross-sectional shape,
wherein the mixing rod (1), at least in the region adjacent to the light exit surface (4),
comprises a cross-section with the shape of a polygon having more than four corners, the shape transition portion (13) from the light entry surface (2) to the boundary surface (15) of the homogenization portion (14) is formed with an increasing diameter of the cross-sectional area, and the length of the homogenization portion (14) is at least 30% of the total length of the mixing rod (1).

2. The mixing rod according to claim 1,
**characterized in that**
the facets are flat or substantially flat.

3. The mixing rod according to any one of claims 1 or 2,
**characterized in that**
the light exit surface (4) comprises a plurality of facets (6) in the radial and/or circumferential direction.

4. The mixing rod according to any one of claims 1 to 3,
**characterized in that**
the shape transition portion (13) and the homogenization portion (14) are formed so as to be flush at a common boundary surface (15).

5. The mixing rod according to any one of claims 1 to 4,
**characterized in that**
the cross-sectional shape of the shape transition portion (13) from the light entry surface (2) toward the light exit surface (4) changes from a polygon, in particular a square, to another polygon, and/or
the polygon comprises more than 5 corners.

6. The mixing rod according to any one of claims 1 to 5,
**characterized in that**
the lateral surface (3) is formed from flat segments, and/or
the length of the mixing rod (1) is at least 1 cm, and/or
the ratio of the length to the diameter at the light entry surface (4) is at least 3:1.

7. The mixing rod according to any one of claims 1 to 6,
**characterized in that**
the mixing rod (1) is formed from a silicone-based plastic or PMMI or PMMA.

8. The mixing rod according to any one of claims 1 to 7,
**characterized in that**
the cross-sectional shape of the homogenization portion (14) comprises an odd number of corners.

9. A lighting device, comprising
- a light source (8),
- a mixing rod (1) according to any one of claims 1 to 8, wherein the mixing rod (1) is arranged with its light entry surface (2) pointing toward the light source (8), and
- a lens (9) which is arranged adjacent to the light exit surface (4).

10. The lighting device according to claim 9,
**characterized in that**
the cross-section of the light entry surface (2) of the mixing rod (1) is realized in the shape of a polygon,
which corresponds to the basic shape of the light source (8),
and is designed to be of such size that it encompasses the light source (8),
wherein the diameter of the cross-sectional area is at most 50% larger than the base area of the light source (8).

11. The lighting device according to claim 9 or 10,
**characterized in that**
the lens (9) is designed to be movable in the direction of an optical axis (5) of the corresponding mixing rod (1), and/or
the lens (9) comprises such a focal length
that the distance between the focal point of the lens (9) and the virtual image produced by the mixing rod (1) is at least 1 mm, and/or
the lens (9) is designed to be aspherical.

12. The lighting device according to any one of claims 9 to 11,
**characterized in that**
along the optical axis (5) in the area between the light source (8) and the movable lens (9), no other optical elements for mixing are arranged apart from the mixing rod (1).

13. The lighting device according to any one of claims 9 to 12,
**characterized in that**
the light source (8) comprises a plurality of light-emitting diodes (10) or one light-emitting diode (10) having several radiating surfaces, and/or
the lighting device (7) comprises a plurality of mixing rods (1), and/or
the lighting device (7) comprises a plurality of lenses (9), and/or
a diffusing screen is arranged so as to be adjacent to the light exit surface of the lens, said diffusing screen comprising holographic micro- and/or nanostructures.

## Revendications

1. Tige de mélange pour mélanger un faisceau de rayons lumineux provenant d'une source lumineuse non homogène (8), sachant que
la tige de mélange (1) est formée à partir d'un corps transparent allongé comprenant une surface d'entrée de lumière (2), une surface latérale (3) et une surface de sortie de lumière (4), la surface de sortie de lumière (4) et/ou la surface d'entrée de lumière (2) étant courbées de manière convexe ou concave, et
la surface de sortie de lumière courbée (4) et/ou la surface d'entrée de lumière courbée (2) comprenant une pluralité de facettes (6),
et sachant que
la tige de mélange (1) comprend une partie de transition de forme (13) dans la direction longitudinale, qui modifie la forme de la surface transversale de la tige de mélange (1) depuis la surface d'entrée de lumière (2) vers une surface limite (15) d'une partie d'homogénéisation (14) en une autre forme, et la tige de mélange (1) comprend la partie d'homogénéisation (14), qui comprend, dans la direction allant de la surface d'entrée de lumière (2) à la surface de sortie de lumière (4), une surface transversale sensiblement constante et une forme transversale sensiblement constante,
sachant que la tige de mélange (1), au moins dans la région adjacente à la surface de sortie de lumière (4), comprend une surface transversale ayant la forme d'un polygone à plus de quatre coins, la partie de transition de forme (13) depuis la surface d'entrée de lumière (2) vers la surface limite (15) de la partie d'homogénéisation (14) est formée avec un diamètre croissant de sa surface transversale, et la longueur de la partie d'homogénéisation (14) est d'au moins 30 % de la longueur totale de la tige de mélange (1).

2. La tige de mélange selon la revendication 1,
**caractérisée en ce que**
les facettes sont plates ou sensiblement plates.

3. La tige de mélange selon l'une quelconque des revendications 1 ou 2,
**caractérisée en ce que**
la surface de sortie de lumière (4) comprend une pluralité de facettes (6) dans la direction radiale et/ou circonférentielle.

4. La tige de mélange selon l'une quelconque des revendications 1 à 3,
**caractérisée en ce que**
la partie de transition de forme (13) et la partie d'homogénéisation (14) sont formées de manière à être affleurantes au niveau d'une surface limite commune (15).

5. La tige de mélange selon l'une quelconque des revendications 1 à 4,
**caractérisée en ce que**
la forme en coupe transversale de la partie de transition de forme (13) depuis la surface d'entrée de lumière (2) vers la surface de sortie de lumière (4) passe d'un polygone, en particulier un carré, à un autre polygone, et/ou
le polygone comprend plus de 5 coins.

6. La tige de mélange selon l'une quelconque des revendications 1 à 5,
**caractérisée en ce que**
la surface latérale (3) est formée à partir de segments plats, et/ou
la longueur de la tige de mélange (1) est d'au moins 1 cm, et/ou
le rapport entre la longueur et le diamètre au niveau de la surface d'entrée de lumière (4) est d'au moins 3:1.

7. La tige de mélange selon l'une quelconque des revendications 1 à 6,
**caractérisée en ce que**
la tige de mélange (1) est formée à partir d'un plastique à base de silicone ou de PMMI ou de PMMA.

8. La tige de mélange selon l'une quelconque des revendications 1 à 7,
**caractérisée en ce que**
la forme en coupe transversale de la partie d'homogénéisation (14) comprend un nombre impair de coins.

9. Dispositif d'éclairage, comprenant
- une source lumineuse (8),
- une tige de mélange (1) selon l'une quelconque des revendications 1 à 8, sachant que la tige de mélange (1) est disposée avec sa surface d'entrée de lumière (2) pointant vers la source lumineuse (8), et
- une lentille (9) disposée de manière adjacente à la surface de sortie de lumière (4).

10. Le dispositif d'éclairage selon la revendication 9,
**caractérisé en ce que**
la coupe transversale de la surface d'entrée de lumière (2) de la tige de mélange (1) est réalisée sous la forme d'un polygone,
qui correspond à la forme de base de la source lumineuse (8),
et est conçue pour être d'une taille telle qu'elle englobe la source lumineuse (8),
le diamètre de la surface transversale étant au maximum de 50 % supérieur à celui de la surface de base de la source lumineuse (8).

11. Le dispositif d'éclairage selon la revendication 9 ou 10,
**caractérisé en ce que**
la lentille (9) est conçue pour être mobile dans la direction d'un axe optique (5) de la tige de mélange (1) correspondante, et/ou
la lentille (9) présente une distance focale telle
que la distance entre le point focal de la lentille (9) et l'image virtuelle produite par la tige de mélange (1) est d'au moins 1 mm, et/ou
la lentille (9) est conçue pour être asphérique.

12. Le dispositif d'éclairage selon l'une quelconque des revendications 9 à 11,
**caractérisé en ce que**
le long de l'axe optique (5), dans la zone située entre la source lumineuse (8) et la lentille mobile (9), aucun autre élément optique pour mélanger n'est disposé en dehors de la tige de mélange (1).

13. Le dispositif d'éclairage selon l'une quelconque des revendications 9 à 12,
**caractérisé en ce que**
la source lumineuse (8) comprend une pluralité de diodes électroluminescentes (10) ou une diode électroluminescente (10) ayant plusieurs surfaces rayonnantes, et/ou
le dispositif d'éclairage (7) comprend une pluralité de tiges de mélange (1), et/ou
le dispositif d'éclairage (7) comprend une pluralité de lentilles (9), et/ou
un écran diffusant est disposé de manière à être adjacent à la surface de sortie de lumière de la lentille, ledit écran diffusant comprenant des microstructures et/ou des nanostructures holographiques.
